# EUROPÄISCHE PATENTSCHRIFT

(11) **EP 1 950 470 B1**
(45) Veröffentlichungstag und Bekanntmachung des Hinweises auf die Patenterteilung: **24.02.2010**
(21) Anmeldenummer: 07122476.0
(22) Anmeldetag: 06.12.2007
(51) Int. Cl.: F16H 63/30, F16C 29/02

(54) **Schaltschieneneinrichtung**
Shift rod device
Dispositif de tiges de changement de vitesses

(30) Priorität: 25.01.2007 DE 102007003709
(43) Veröffentlichungstag der Anmeldung: 30.07.2008
(73) Patentinhaber: Schaeffler KG, 91074 Herzogenaurach (DE)
(72) Erfinder: Krämer, Klaus, 91460 Baudenbach (DE); Mehlis, Thomas, 91077 Kleinsendelbach (DE)

(56) Entgegenhaltungen:
- DE-A1- 1 455 674
- DE-A1- 10 258 232
- DE-A1- 19 832 380
- DE-A1- 19 901 674
- DE-A1- 19 912 402
- DE-A1- 19 925 563
- DE-A1-102004 002 805
- DE-A1-102004 010 258
- DE-U1-202005 014 599
- GB-A- 2 013 796

## Beschreibung

### Gebiet des Erfindung

Die Erfindung bezieht sich auf eine Schaltschieneneinrichtung für ein Schaltgetriebe zur translatorischen Verlagerung eines Schaltorgans entlang einer Schaltbahn, mit einer Schaltschiene und einer Führungsstruktur zur Bereitstellung einer Führungsfläche die sich in Richtung der Schaltbahn erstreckt und die Schaltschiene quer zur Schaltbahn abstützt.

Aus der gattungsgemäßen DE 10 143 360 A1 ist eine Schalteinrichtung für ein KfZ-Schaltgetriebe bekannt, die mehrere Schaltschienen umfasst die zu einer Schaltschienenpackung zusammengefasst sind. Diese Schaltschienenpackung ist in einer durch eine Führungsstruktur bereitgestellten Rechtecköffnung geführt. Die einzelnen Schaltschienen dieser Schaltschienenpackung sind gegeneinander in Längsrichtung der Schaltschienenpackung verlagerbar.

Aus DE 10 2004 002 804 A1 ist eine Führungsstruktur zur Lagerung der Schaltschienen eines KfZ-Schaltgetriebes bekannt. Diese Führungsstruktur bildet zwei innenseitig mit einer Kunststoffbeschichtung versehene Führungsöffnungen, in welchen die entsprechenden Schaltschienen in voneinander beabstandeter Weise axial verschiebbar geführt sind.

Der Erfindung liegt die Aufgabe zugrunde, eine Schaltschieneneinrichtung für ein Schaltgetriebe zu schaffen, das unter fertigungstechnischen Gesichtspunkten günstig herstellbar ist und in einem breiten Temperaturspektrum leichtgängig betätigbar ist.

Diese Aufgabe wird erfindungsgemäß gelöst durch eine Schaltschieneneinrichtung gemäß Anspruch 1.

Dadurch wird es auf vorteilhafte Weise möglich, die Schaltschiene mit einer, durch ein vorgefertigtes Ansatzelement gebildeten Gleitfunktionsfläche auszustatten und die Schaltschiene unabhängig von den Gleitfunktionseigenschaften des Gleitschienenkernmateriales leichtgängig zu führen.

Gemäß einer besonders bevorzugten Ausführungsform der Erfindung ist das Axialführungsorgan aus einem Kunststoffmaterial gefertigt. Bei diesem Kunststoffmaterial kann es sich insbesondere um eine mit Füllstoffen befrachtete Kunststoffmaterialmischung handeln. Insbesondere ist es möglich, in dieses Kunststoffmaterial Füllstoffe in Form metallischer oder keramischer Partikel, sowie insbesondere auch Trockenschmierstoffpartikel einzubinden.

Erfindungsgemäß ist das Axialführungsorgan geteilt ausgebildet. Das Axialführungsorgan ist als Halbschale ausgeführt, die eine auf der Schaltschiene aufsitzende Sitzfläche und eine dieser abgewandte Gleitfläche bildet. Das Axialführungsorgan kann aus einer homogenen Kunststoffmaterialmischung gebildet sein. Es ist jedoch auch möglich, das Axialführungsorgan als Mehrstoffelement auszuführen, das beispielsweise eine aus einem Polyamid-Werkstoff gefertigte Kernlage und eine Decklage aufweist die aus einem mit Gleit-Zusatzstoffen befrachteten Kunststoffmaterial gefertigt ist. Die Kernlage kann hierbei als filigrane Kunststoffstruktur gefertigt sein die hochfest an der Schaltschiene sicherbar ist. Die mit Gleit-Zusatzstoffen ausgestatte Decklage kann insgesamt spröder und aus einem schlechter fließfähigen Materialausgebildet sein.

Vorzugsweise sind an dem Axialführungsorgan im Bereich der Sitzfläche desselben Befestigungsabschnitte ausgebildet, über welche das Axialführungsorgan an der Schaltschiene verankerbar ist. Es ist möglich, die Befestigungsabschnitte als Steckzapfen auszuführen, wobei diese Steckzapfen in entsprechend an der Schaltschiene in dem von der Sitzfläche abgedeckten Bereich ausgebildete Ausnehmungen einsetzbar sind. Diese Ausnehmungen können als Durchgangsbohrungen ausgeführt sein.

Gemäß einer besonders bevorzugten Ausführungsform der Erfindung wird die Führungsstruktur durch Ansetzen eines ersten Halbschalenelementes auf eine erste Seitenfläche der Führungsschiene sowie durch Ansetzen eines zweiten Halbschalenelementes auf ein der vorgenannten Ansatzzone des ersten Halbschalenelementes gegenüberliegende Ansatzzone der Führungsschiene gebildet. In diesem die Halbschalenelemente tragenden Bereich der Führungsschiene sind hierbei Durchgangsbohrungen ausgebildet, wobei die beiden Halbschalenelemente durch diese Durchgangsbohrungen durchsetzende Materialabschnitte miteinander verbunden sind. Diese die Durchgangsbohrung durchsetzenden Materialabschnitte können insbesondere als ineinander einsteckbare Zapfenstrukturen ausgebildet sein.

Vorzugsweise werden diese die Durchgangsbohrung durchsetzenden Materialabschnitte stofflich, insbesondere durch einen Schweißvorgang miteinander verbunden. Dieser Schweißvorgang kann insbesondere als Ultraschall-Schweißvorgang ausgeführt werden. Weiterhin ist es auch möglich, die Schweißverbindung durch Laser-Schweißen zu realisieren. Es ist möglich, die beiden Halbschalenelemente auch außerhalb der Durchgangsbohrungen, insbesondere im Bereich ihrer einander zugewandten, die Seitenflächen der Schaltschiene umgreifenden Längsflanken miteinander zu verschweißen. Die erfindungsgemäße Führungsstruktur kann hierbei eine die Schaltschiene umgreifende Kastenhülse bilden.

### Kurze Beschreibung der Zeichnungen

Weitere Einzelheiten und Merkmale der Erfindung ergeben sich aus der nachfolgenden Beschreibung in Verbindung mit der Zeichnung. Es zeigt:
- Figur 1: eine perspektivische Darstellung zur Veranschaulichung einer Schaltschieneneinrichtung, wie sie insbesondere in einem manuell zu schaltenden KfZ-Schaltgetriebe Anwendung finden kann.
- Figur 2: eine perspektivische Detaildarstellung zur Veranschaulichung eines bevorzugten Aufbaus eines erfindungsgemäßen Axialführungsorgans sowie auch zur Veranschaulichung der Montage desselben an einer Schaltschiene,
- Figur 3: eine weitere perspektivische Darstellung zur Veranschaulichung einer erfindungsgemäßen Schaltschieneneinrichtung.

### Ausführliche Beschreibung der Zeichnungen

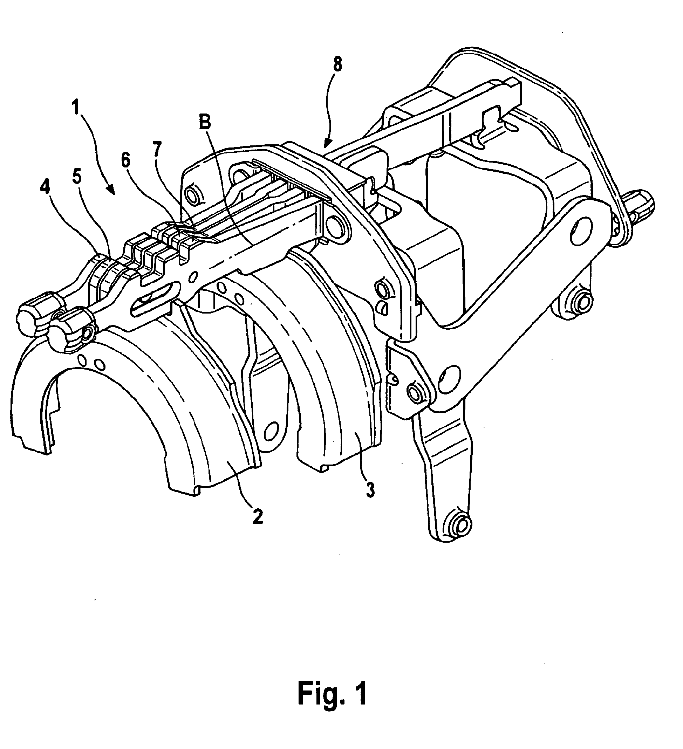

Figur 1 zeigt eine Schaltschieneneinrichtung 1 für ein Schaltgetriebe zur translatorischen Verlagerung eines hier als Schaltgabel 2, 3 ausgeführten Schaltorgans entlang einer Schaltbahn B. Die Schaltschieneneinrichtung 1 umfasst bei diesem Ausführungsbeispiel mehrere Schaltschienen 4, 5, 6, 7, sowie eine Führungsstruktur 8, die als solche der Bereitstellung hier nicht näher erkennbarer Führungsflächen dient, die sich in Richtung der Schaltbahn B erstrecken und die Schaltschiene quer zur Schaltbahn B abstützt.

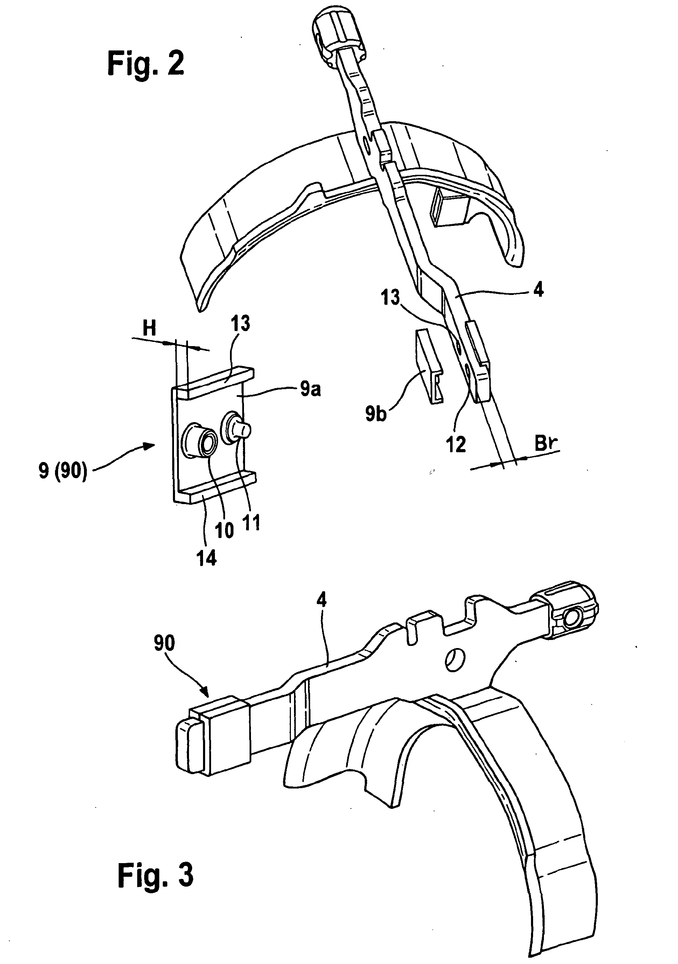

Die Führungsstruktur 8 und die Schaltschienen 4, 5, 6, 7 sind derart aufeinander abgestimmt, dass zwischen diesen Komponenten ein Spaltraum verbleibt. In diesem Spaltraum ist ein Axialführungsorgan 90 (siehe Figur 3) angeordnet. Dieses Axialführungsorgan 90 ist an der jeweiligen Schaltschiene 4, 5, 6, 7 derart gesichert, dass dieses gemeinsam mit der jeweiligen Schaltschiene 4, 5, 6, 7 gegenüber der Führungsstruktur 8 oder einer benachbarten Schaltschiene verlagerbar ist.

Der innere Aufbau, und die Anbindung dieses Axialführungsorgans 90 an die jeweilige Schaltschiene ist aus Figur 2 ersichtlich. Das in Figur 2 dargestellte Axialführungsorgan 90 ist aus einem Kunststoffmaterial gefertigt und durch zwei an die Schaltschiene 4 angesetzte Halbschalen 9 gebildet. Jede Halbschale 9 umfasst eine auf der Schaltschiene 4 aufsitzende Sitzfläche 9a sowie eine dieser Sitzfläche 9a abgewandte, als Gleitfläche 9b fungierende Außenfläche. Im Bereich der Sitzfläche 9a ist die Halbschale 9 mit Befestigungsabschnitten 10, 11 versehen.

Diese Befestigungsabschnitte 10, 11 sind als Steckzapfen ausgeführt, die in komplementär hierzu in der Schaltschiene ausgebildete Ausnehmungen 12, 13 einsetzbar sind.

Wie aus dieser Darstellung weiter erkennbar, wird das erfindungsgemäße Axialführungsorgan durch beidseitiges Ansetzen jeweils einer vorgenannten Halbschale 9 an die entsprechende Seitenfläche der Führungsschiene 4 gebildet. Die beiden derart an die Schaltschiene 4 angesetzten Halbschalenelemente 9 gelangen in angesetztem Zustand über ihre Befestigungsabschnitte 10, 11 miteinander in Eingriff.

Die miteinander in Eingriff stehenden Befestigungsabschnitte 10, 11 der beiden an die Schaltschiene 4 angesetzten Halbschalenelemente 9 werden durch einen Schweißvorgang miteinander verschweißt. Dieser Schweißvorgang kann insbesondere als Ultraschall-Schweißvorgang ausgeführt werden. Alternativ hierzu ist es auch möglich, den Schweißvorgang als Laser-Schweißvorgang auszuführen.

Bei dem hier gezeigten Ausführungsbeispiel sind die Halbschalenelemente 9 so gestaltet, dass diese in montiertem Zustand eine die Schaltschiene 4 lokal umgreifende Kastenhülse bilden.

Wie aus Figur 2 weiter ersichtlich, ist es möglich, die Halbschalenelemente 9 so auszubilden, dass diese Randstege 13, 14 aufweisen, die als solche eine die entsprechenden Längsseitenflächen der Schaltschiene 4 umgreifende Rinnenstruktur bilden. Es ist möglich, diese Randstege 13, 14 so zu dimensionieren, dass deren Überstandshöhe H über eine durch die Sitzfläche 9a definierte Innenebene im wesentlichen der Hälfte der Breite Br der Schaltschiene 4 entspricht. Die derart gestalteten Halbschalenelemente 9 können damit auch im Bereich der durch die Randstege 13, 14 definierten, einander zugewandten Stirnflächen miteinander verschweißt werden.

Wie aus der Darstellung nach Figur 2 weiter ersichtlich, ist es möglich, das Halbschalenelement 9 so zu gestalten, dass zwei Halbschalenelemente 9 dieser Bauart zu einer Rechteckhülse zusammengesetzt werden können. Hierzu ist es insbesondere möglich, die beiden Befestigungsabschnitte 10, 11 hinsichtlich ihrer Außengeometrie als Komplementärstrukturen zu gestalten, sodass diese Befestigungsabschnitte 10, 11 entsprechend ineinander fügbar sind. Bei dem hier gezeigten Ausführungsbeispiel ist beispielsweise der Befestigungsabschnitt 10 als Hohlzapfen ausgebildet. Die durch diesen Hohlzapfen 10 definierte Innenbohrung ist so dimensioniert, dass in diese der durch den Befestigungsabschnitt 11 bereitgestellte Kernzapfen eines weiteren Halbschalenelementes unter leichtem Presssitz einsetzbar ist.

Es ist auch möglich, die Randstege 13, 14 so zu gestalten, dass durch diese eine zusätzliche Sicherung der Halbschalenelemente an der Schaltschiene sowie eine Verbindung der Halbschalenelemente miteinander erreicht werden kann.

In Figur 3 ist eine mit einem erfindungsgemäßen Axialführungsorgan 90 ausgestattete Schaltschiene 4 dargestellt. Dieses Axialführungsorgan 90 ist durch Ansetzen der beiden vorangehend in Verbindung mit Figur 2 beschriebenen Halbschalenelemente 9 an die entsprechenden Seitenflächenabschnitte der Schaltschiene 4 gebildet. Die beiden Halbschalenelemente 9 sind im Bereich der miteinander in Kontakt stehenden Eingriffs- und Stirnflächen verschweißt.

Das hier gezeigte Axialführungsorgan bildet einen Führungskörper, durch welchen eine Führung der Schaltschiene 4 entlang entsprechender Führungsflächen ermöglicht wird. Neben den vorangehend beschriebenen in der Schaltschiene 4 ausgebildeten Durchgangsbohrungen 12, 13 ist es auch möglich, an der Schaltschiene 4 anderweitige Mitnehmerstrukturen auszubilden durch welche eine zusätzliche Sicherung und Verankerung des Axialführungsorgans an der Führungsschiene 4 erreicht wird.

Das erfindungsgemäße Konzept zur Führung der Schaltschiene eines Schaltgetriebes ermöglicht eine zuverlässige Abstützung von Querkräften sowie von Drehmomenten. Bei den vorangehend beschriebenen, als Gleitschuh fungierenden Halbschalenelementen 9 handelt es sich um zweiteilige, die Schaltschiene U-förmig umgreifende Gleitschuhhalbschalen die mittels ineinandersteckbarer Zapfen vorgefügt werden und anschließend durch Ultraschall verschweißt werden.

## Patentansprüche

1. Schaltschieneneinrichtung für ein Schaltgetriebe zur translatorischen Verlagerung eines Schaltorgans entlang einer Schaltbahn B, mit:
- einer Schaltschiene (4, 5, 6, 7), und
- einer Führungsstruktur (8) zur Bereitstellung einer Führungsfläche, die sich in Richtung der Schaltbahn erstreckt und die Schaltschiene quer zur Schaltbahn abstützt,
- wobei die Führungsstruktur (8) und die Schaltschiene (4, 5, 6, 7) derart aufeinander abgestimmt sind, dass zwischen diesen Komponenten ein Spaltraum verbleibt, und
- wobei in diesem Spaltraum ein Axialführungsorgan (90) angeordnet ist,
- und wobei das Axialführungsorgan (90) in einer rechteckförmigen Aufnahme der Führungsstruktur translatorisch verlagerbar ist
**dadurch gekennzeichnet, dass** dieses Axialführungsorgan (90) an der entsprechenden Schaltschiene (4, 5, 6, 7) derart gesichert ist, dass dieses gemeinsam mit der Schaltschiene (4, 5, 6,7) gegenüber der Führungsstruktur (8) entlang der Führungsfläche verlagerbar ist, dass das Axialführungsorgan (90) durch eine erste Halbschale (9) und eine zweite Halbschale (9) gebildet ist, wobei jede Halbschale (9) eine auf der Schaltschiene (4, 5, 6, 7) aufsitzende Sitzfläche (9a) und eine dieser abgewandte Gleitfläche (9b) bildet und dass dadurch das Axialführungsorgan (90) eine die Schaltschiene (4) umgreifende Kasten-Hülse bildet, die durch die zu einer Rechteckhülse zusammengesetzten Halbschalen gebildet ist.

2. Schaltschieneneinrichtung nach Anspruch 1, **dadurch gekennzeichnet, dass** das Axialführungsorgan (90) aus einem Kunststoffmaterial gefertigt ist.

3. Schaltschieneneinrichtung nach Anspruch 1, **dadurch gekennzeichnet, dass** im Bereich der Sitzfläche (9a) Befestigungsabschnitte (10, 11) ausgebildet sind.

4. Schaltschieneneinrichtung nach Anspruch 3, **dadurch gekennzeichnet, dass** die Befestigungsabschnitte (10, 11) als Steckzapfen ausgeführt sind und dass an der Schaltschiene (4, 5, 6,7) in dem von der Sitzfläche (9a) abgedeckten Bereich Ausnehmungen (12, 13) ausgebildet sind.

5. Schaltschieneneinrichtung nach Anspruch 4, **dadurch gekennzeichnet, dass** die Ausnehmungen (12, 13) als Durchgangsbohrungen ausgebildet sind.

6. Schaltschieneneinrichtung nach Anspruch 5, **dadurch gekennzeichnet, dass** einer der Befestigungsabschnitte (10) als Hohlzapfen und der andere Befestigungsabschnitt (11) als Kernzapfen ausgeführt ist.

7. Schaltschieneneinrichtung nach Anspruch 6, **dadurch gekennzeichnet, dass** die beiden Halbschalen (9) durch die Durchgangsbohrungen (12, 13) hindurch miteinander verbunden sind.

8. Schaltschieneneinrichtung nach Anspruch 1, **dadurch gekennzeichnet, dass** die Halbschalen (9) miteinander verschweißt sind.

9. Schaltschieneneinrichtung nach Anspruch 1 oder 8, **dadurch gekennzeichnet, dass** die Halbschalen miteinander ultraschallverschweißt sind.

10. Schaltschieneneinrichtung nach Anspruch 1 oder 8, **dadurch gekennzeichnet, dass** die Halbschalen miteinander laserverschweißt sind.

11. Schattschieneneinrichtung nach Anspruch 1, **dadurch gekennzeichnet, dass** die beiden Halbschalen (9) über einen Filmscharnierabschnitt miteinander verbunden sind.

12. Schaltschieneneinrichtung nach Anspruch 1, **dadurch gekennzeichnet, dass** wenigstens eine der Halbschalen (9) im Bereich ihrer Gleitfläche (9b) mit einer die Gleitfunktion unterstützenden Profilierung versehen ist.

## Claims

1. Gearshift rail assembly for a manual transmission for enabling a translational displacement of a gear shifting member along a gearshift path B, comprising:
- a gearshift rail (4, 5, 6, 7), and
- a guide structure (8) for providing a guide surface which extends in the direction of the gearshift path and supports the gearshift rail in a direction crosswise to the gearshift path,
- the guide structure (8) and the gearshift rail (4, 5, 6, 7) being matched to each other in such a way that a gap is formed between these two components,
- an axial guide member (90) being arranged in this gap, and
- the axial guide member (90) being displaceable by translation in a rectangular reception of the guide structure,
**characterised in that** said axial guide member (90) is secured on the respective gearshift rail (4, 5, 6, 7) such that it is displaceable together with the gearshift rail (4, 5, 6, 7) relative to the guide structure (8) along the guide surface, and **in that** the axial guide member (90) is composed of a fi rst semi-shell (9) and a second semi-shell (9), each of said semi-shells (9) forms a seating surface (9a) seated on the gearshift rail (4, 5, 6, 7) and a sliding surface (9b) turned away from said seating surface (9a), so that the axial guide member (90) thus forms a box-type bushing surrounding the gearshift rail (4) and formed by assembling the semi-shells together into a rectangular bushing.

2. Gearshift rail assembly according to claim 1, **characterised in that** the axial guide member (90) is made of a plastic material.

3. Gearshift rail assembly according to claim 1, **characterised in that** fixing sections (10, 11) are configured in the region of the seating surface (9a).

4. Gearshift rail assembly according to claim 3, **characterised in that** the fixing sections (10, 11) are configured in the form of plug-in pins and recesses (12, 13) are configured in the gearshift rail (4, 5, 6, 7) in its region that is overlapped by the seating surface (9a).

5. Gearshift rail assembly according to claim 4, **characterised in that** the recesses (12, 13) are configured as through-bores.

6. Gearshift rail assembly according to claim 5, **characterised in that** one of the fixing sections (10) is configured as a hollow pin and the other fixing section (11) is configured as a core pin.

7. Gearshift rail assembly according to claim 6, **characterised in that** the two semi-shells (9) are connected to each other through the through-bores (12, 13).

8. Gearshift rail assembly according to claim 1, **characterised in that** the semi-shells (9) are welded to each other.

9. Gearshift rail assembly according to claim 1 or 8, **characterised in that** the semi-shells (9) are welded to each other by ultrasonic welding.

10. Gearshift rail assembly according to claim 1 or 8, **characterised in that** the semi-shells (9) are welded to each other by laser welding.

11. Gearshift rail assembly according to claim 1, **characterised in that** the semi-shells (9) are connected to each other by a film hinge section.

12. Gearshift rail assembly according to claim 1, **characterised in that** at least one of the semi-shells (9) is provided in the region of its sliding surface (9b) with a profile that promotes its sliding function.

## Revendications

1. Ensemble de réglette de changement de vitesse d'une boîte de vitesses pour déplacement d'un membre de changement de vitesse par translation le long d'une piste B de changement de vitesse, comprenant :
- une réglette (4, 5, 6, 7) de changement de vitesse, et
- une structure (8) de guidage pour la mise à disposition d'une surface de guidage qui s'étend en direction de la piste de changement de vitesse en supportant la réglette de changement de vitesse en travers de la piste de changement de vitesse,
- ladite structure (8) de guidage et ladite réglette (4, 5, 6, 7) de changement de vitesse étant adaptées de telle façon, l'une à l'autre, qu'il se forme entre ces deux composants, un intervalle,
- un membre axial (90) de guidage étant agencé dans cet intervalle, et
- ce membre axial (90) de guidage étant déplaçable par translation dans une réception rectangulaire de la structure de guidage,
**caractérisé en ce que** ledit membre axial (90) de guidage est sécurisé sur la réglette (4, 5, 6, 7) correspondante de changement de vitesse de manière à être déplaçable avec ladite réglette (4, 5, 6, 7) de changement de vitesse par rapport à la structure (8) de guidage le long de la surface de guidage, **en ce que** le membre axial (90) de guidage est formé par une première demi-coque (9) et une seconde demi-coque (9), chacune de ces demi-coques (9) formant une surface (9a) de siège assiégée sur la réglette (4, 5, 6, 7) de changement de vitesse et une surface (9b) de glissement orientée à l'opposé de cette surface (9a) de siège, de sorte que le membre axial (90) de guidage forme ainsi une douille en forme de caisson entourant la réglette (4) de changement de vitesse et se formant par la suite de l'assemblage des deux demi-coques, l'une avec l'autre, en douille rectangulaire.

2. Ensemble de réglette de changement de vitesse selon la revendication 1, **caractérisé en ce que** le membre axial (90) de guidage est fabriqué en une matière synthétique.

3. Ensemble de réglette de changement de vitesse selon la revendication 1, **caractérisé en ce que**, dans la région de la surface (9a) de siège sont configurées des sections (10, 11) de fixation.

4. Ensemble de réglette de changement de vitesse selon la revendication 3, **caractérisé en ce que** les sections (10, 11) de fixation sont configurées sous la forme de goupilles enfichables et que, dans la région de la réglette (4, 5, 6, 7) de changement de vitesse recouverte par la surface (9a) de siège sont prévus des évidements (12, 13).

5. Ensemble de réglette de changement de vitesse selon la revendication 4, **caractérisé en ce que** les évidements (12, 13) sont configurés sous la forme d'alésages traversants.

6. Ensemble de réglette de changement de vitesse selon la revendication 5, **caractérisé en ce que** l'une des sections (10) de fixation est configurées sous la forme d'une goupille creuse et l'autre section (11) de fixation est configurée en goupille noyau.

7. Ensemble de réglette de changement de vitesse selon la revendication 6, **caractérisé en ce que** les deux demi-coques (9) sont reliées, l'une à l'autre, au travers des alésages traversants (12, 13).

8. Ensemble de réglette de changement de vitesse selon la revendication 1, **caractérisé en ce que** les deux demi-coques (9) sont soudées, l'une à l'autre.

9. Ensemble de réglette de changement de vitesse selon l'une des revendications 1 ou 8, **caractérisé en ce que** les deux demi-coques (9) sont soudées, l'une à l'autre, par soudage ultrasonique.

10. Ensemble de réglette de changement de vitesse selon l'une des revendications 1 ou 8, **caractérisé en ce que** les deux demi-coques (9) sont soudées, l'une à l'autre, par soudage au laser.

11. Ensemble de réglette de changement de vitesse selon la revendication 1, **caractérisé en ce que** les deux demi-coques (9) sont reliées, l'une à l'autre, par une section de charnière en film.

12. Ensemble de réglette de changement de vitesse selon la revendication 1, **caractérisé en ce que**, au moins l'une des deux demi-coques (9) est munie dans la région de la surface (9b) de glissement d'un profile qui favorise sa fonction de glissement.
